# FASCICULE DE BREVET EUROPEEN

(11) **EP 0 623 374 B1**
(45) Date de publication et mention de la délivrance du brevet: **17.03.1999**
(21) Numéro de dépôt: 94400905.9
(22) Date de dépôt: 27.04.1994
(51) Int. Cl.: B01D 45/14, B04B 5/12

(54) **Séparateur centrifuge de fluides**
Zentrifugalabscheider für Fluide
Centrifugal separator for fluids

(30) Priorité: 30.04.1993 FR 9305157
(43) Date de publication de la demande: 09.11.1994
(73) Titulaire: Berlette, Jacques Philippe, 92500 Rueil-Malmaison (FR)
(72) Inventeur: Berlette, Jacques Philippe, 92500 Rueil-Malmaison (FR)
(74) Mandataire: Dawidowicz, Armand

(56) Documents cités:
- EP-A- 0 088 657
- EP-A- 0 306 278
- CH-A- 224 181
- DE-C- 923 523
- FR-A- 2 540 404
- US-A- 3 865 022

## Description

La présente invention concerne la séparation des phases d'un mélange et, plus spécifiquement, l'épuration d'un fluide généralement gazeux chargé de particules liquides et/ou solides. Elle s'applique notamment à l'épuration de flux d'air tels que des aérosols, des buées chargées de lessives, des brouillards d'arrosage ou de poteyage, des brouillards et fumées d'huile entière ou soluble, l'ensemble des flux précités apparaissant dans de nombreuses industries lors de mise en oeuvre d'opérations mécaniques classiques telles que le décolletage, l'usinage à sec en tournage, le meulage, la déformation du métal à chaud ou à froid et les traitements des surfaces, etc.

La dépollution de fluides gazeux, en particulier de l'air, par séparation des phases du mélange et extraction des particules, généralement de dimensions de l'ordre du micron ou voisines du micron, pose un certain nombre de problèmes devant être résolus.

En effet, les épurateurs connus à ce jour pour assurer de telles fonctions soit sont complexes et couteux, soit présentent une efficacité insuffisante surtout par rapport aux particules les plus fines qui sont les plus difficiles à extraire d'un flux gazeux. La plupart des épurateurs séparant mécaniquement les composants d'un mélange à épurer font passer après traitement la phase gazeuse légère dans une enceinte guidant l'expulsion de ce gaz dans l'atmosphère ambiante ou vers un récipient destiné à son stockage et à son transport et la phase lourde dans une enceinte de collecte permettant l'évacuation de celle-ci à l'extérieur de l'enceinte de traitement, généralement par gravité, dans des tuyauteries de guidage. L'enceinte recueillant la phase gazeuse légère épurée reçoit un volume gazeux important et doit souvent permettre sa dispersion dans le milieu ambiant à faible vitesse pour ne pas perturber l'équilibre des conditions physiques de l'état du milieu. De ce fait, les installations connues à ce jour sont encombrantes et lourdes. Certaines installations, telles que celle décrite dans le brevet FR-A-2.653.037, pallient partiellement les inconvénients précités. Cependant, dans le cas de cette installation connue, la réduction de l'encombrement est compensée par une augmentation de la maintenance. En effet, dans le cas de cette installation, le flux gazeux épuré partiellement ou totalement est évacué à deux niveaux de l'appareil, ce qui oblige à un retraitement du flux évacué au premier niveau et entraîne probablement une maintenance plus importante de l'installation liée à un encrassage plus rapide de cette installation.

On connaît également, par exemple par FR-A-2.540.404, un séparateur centrifuge de fluides chargés de particules du type comprenant une chambre de centrifugation équipée de moyens d'entraînement pour créer un flux gazeux axial soumis à centrifugation dans ladite chambre, le flux à épurer pénétrant dans cette chambre par une ouverture d'entrée dite ouverture amont et étant soumis à l'action d'un équipage mobile générant radialement un champ centrifuge séparateur sur ce flux qui s'échappe partiellement épuré par une ouverture de sortie (4) dite ouverture aval.

Ce séparateur connu présente les mêmes inconvénients.

Le but de la présente invention est donc de proposer un séparateur centrifuge permettant d'une part une meilleure intégration de la phase gazeuse épurée dans le milieu ambiant sans augmenter les dimensions de l'appareil, d'autre part une maintenance réduite de l'appareil grâce à une très bonne séparation des phases lourde et légère sans possibilité de remélange et d'atteindre une qualité et une fiabilité de l'épuration comparables à celles obtenues par des installations dites de filtration absolue.

L'invention concerne à cet effet un séparateur centrifuge de fluides chargés de particules du type comprenant une chambre de centrifugation équipée de moyens d'entraînement pour créer un flux gazeux axial soumis à centrifugation dans ladite chambre, le flux à épurer pénétrant dans cette chambre par une ouverture d'entrée dite ouverture amont et étant soumis à l'action d'un équipage mobile générant radialement un champ centrifuge séparateur sur ce flux qui s'échappe partiellement épuré par une ouverture de sortie dite ouverture aval, caractérisé en ce que l'ouverture aval de ladite chambre de centrifugation débouche dans une enceinte partagée par une cloison annulaire coaxiale à l'équipage mobile et l'entourant de manière à délimiter deux chambres de traitement, l'une, de centrifugation, entourant l'équipage mobile, pour la récupération des particules lourdes, l'autre, de filtration, entourant coaxialement la première chambre, pour le traitement final du fluide gazeux épuré.

Selon une forme de réalisation préférée de l'invention, la chambre de centrifugation est délimitée par la paroi collectrice des particules qui est de révolution autour d'un axe longitudinal constituant l'axe de rotation de l'équipage mobile, ladite chambre présentant des génératrices, inclinées par rapport au plan normal à l'axe de rotation et à allure convergente de l'extrémité amont de ladite chambre vers l'extrémité aval de ladite chambre et les parois périphériques externes de l'enceinte de récupération du gaz épuré délimitent avec la cloison annulaire un espace de volume décroissant de l'extrémité aval vers l'extrémité amont de la chambre de centrifugation .

De préférence, ladite enceinte de récupération est stationnaire.

D'autres caractéristiques et avantages de l'invention apparaîtront encore à la lecture de la description détaillée qui suit et des dessins joints, cités uniquement à titre d'exemples non limitatifs, dans lesquels:
la figure 1 représente une vue partielle en coupe d'un séparateur centrifuge à pales conforme à l'invention;
la figure 2 représente une vue partielle en coupe d'un séparateur centrifuge à cônes conforme à l'invention.

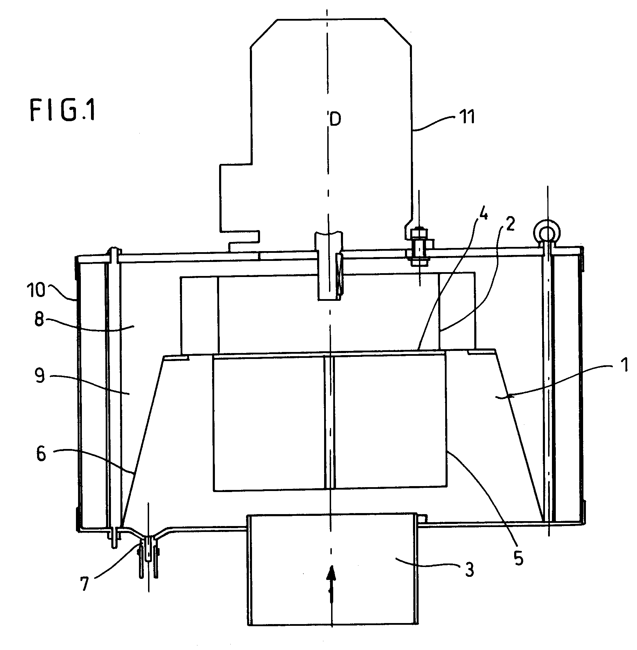

Le séparateur centrifuge, objet de l'invention, comprend une chambre de centrifugation 1 équipée de moyens d'entraînement 2 pour créer un flux gazeux axial soumis à centrifugation dans ladite chambre par l'intermédiaire d'un équipage mobile 5. Le flux gazeux à épurer est introduit dans cette chambre 1 par une ouverture d'entrée 3 dite ouverture amont et s'échappe de ladite chambre partiellement épuré par une ouverture de sortie dite ouverture aval 4. L'équipage mobile 5, qui génère un champ centrifuge séparateur sur le flux gazeux, peut affecter un grand nombre de formes. Ainsi, à la figure 1, cet équipage mobile est constitué par un rotor d'entraînement qui comporte des pales fixées sur un arbre pour être entraînées en rotation autour de l'axe D. Ces pales présentent sensiblement la forme de plaques dont la longueur est parallèle à cet axe D et les largeurs sont disposées radialement. Le rotor est muni d'un moteur 11 tournant à plusieurs milliers de tours par minute pour faire apparaître, au bord périphérique desdites pales d'entraînement, une accélération centrifuge.

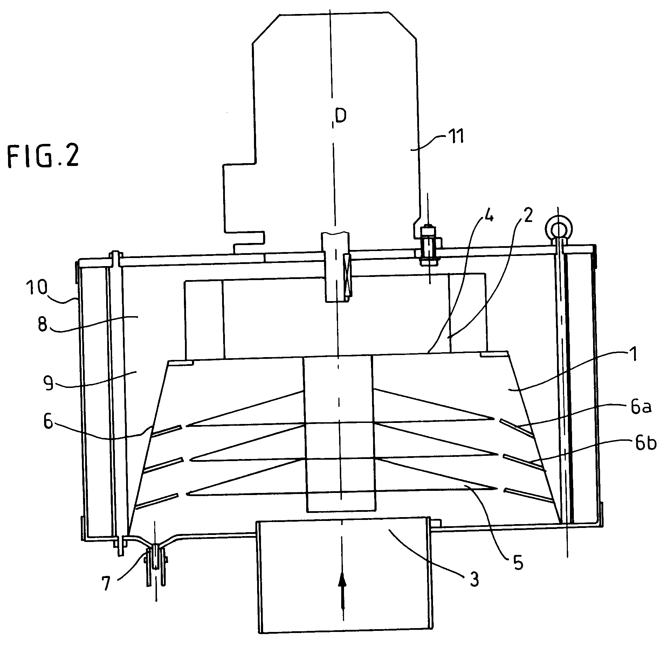

Dans une forme de réalisation conforme à la figure 2, cet équipage mobile peut au contraire être constitué par un empilement d'éléments tels que des cônes montés à rotation sur un axe commun entraîné au moyen d'un moteur 11. Il est également possible d'utiliser un équipage mobile du type de celui décrit dans le brevet FR-A-2.540.404. Dans ce cas, l'équipage mobile est formé principalement d'un empilement de plaques de révolution ceinturées par des anneaux périphériques formant entretoises d'écartement entre les plaques, cet équipage mobile étant mû en rotation par l'intermédiaire d'un moteur, d'un moto-agitateur ou d'un moto-ventilateur qui crée au travers dudit équipage un flux de circulation du mélange à épurer. Les plaques sont identiques ou différentes entre elles et sont fixées seulement par leur bord périphérique entre les anneaux périphériques qui séparent ces plaques ou au contraire sont fixées directement en leur centre à l'arbre d'entraînement.

Associés a cet équipage mobile 5, il est prévu des moyens d'entraînement 2 du flux gazeux pour créer un flux gazeux axial à l'intérieur de la chambre de centrifugation 1 selon l axe longitudinal D de ladite chambre. Ces moyens d'entraînement peuvent par exemple être constitués, comme le montrent les figures 1 et 2, par un ventilateur de sortie ou turbine d'aspiration 2 qui est entraîné par un moteur pour aspirer ledit gaz vecteur. Ce moyen d'entraînement 2 constitue un moyen de circulation pour faire circuler ce gaz de ladite ouverture d'entrée 3 à ladite ouverture de sortie 4 de ladite chambre en présentant une composante de vitesse longitudinale. Dans le cas d'un équipage mobile du type de celui décrit dans le brevet FR-A-2.540.404 précité, les moyens d'entraînement du flux gazeux, pour créer un flux axial à l'intérieur de la chambre de centrifugation 1 de l'ouverture d'entrée 3 vers l'ouverture de sortie 4, peuvent être constitués par des pales montées solidaires des plaques de révolution superposées constituant l'équipage mobile 5. Les pales peuvent ainsi, a titre d'exemple, être montées radialement sur lesdites plaques et sont inclinées par rapport à la surface supérieure ou du dessus desdites plaques d'un angle prédéterminé et comportent au niveau de leur base de raccordement avec ladite plaque des orfices traversants assurant le nettoyage de l'angle de raccordement pale/plaque. Ces pales qui se dressent à la surface du dessus des plaques sont inclinées dans la direction de rotation des plaques de manière à ne pas constituer un frein à l'écoulement du flux gazeux. La propriété d'autonettoyage de ces pales limite la maintenance de l'équipage mobile. En outre, pour pallier l'augmentation de poids de l'équipage mobile qui résulte de ces pales disposées circonférentiellement de préférence à intervalles réguliers sur la surface du dessus des plaques, il sera préférable de réaliser l'ensemble de l'équipage mobile en matériaux composites.

L'équipage mobile 5 tel que décrit ci-dessus génère donc un champ centrifuge séparateur sur ce flux à l'intérieur de la chambre de centrifugation 1 dont la paroi périphérique 6 de révolution autour de l'axe D constituant l'axe de rotation de l'équipage mobile 5 collecte les particules extraites du mélange à épurer. Ces particules sont par la suite, de manière connue, évacuées de l'enceinte généralement par gravité à travers une ouverture d'évacuation 7.

Le flux partiellement épuré qui s'échappe par l'ouverture de sortie 4 de la chambre de centrifugation 1 débouche dans une enceinte 8 partagée par une cloison annulaire 6 coaxiale à l'équipage mobile 5 et qui constitue la paroi collectrice de la première chambre de centrifugation 1. Les deux enceintes 1 et 8 ainsi délimitées sont coaxiales. L'enceinte 8 la plus éloignée de l'équipage mobile 5 est de préférence stationnaire, la rotation de sa paroi périphérique externe 10 présentant peu d'avantages. Par contre, ces parois périphériques externes 10 sont de préférence filtrantes de manière à permettre le passage du flux épuré directement dans le milieu ambiant. En raison de l'importante surface d'échange entre l'enceinte 8 et le milieu ambiant, il est possible de rejeter directement le gaz épuré deux fois dans l'atmosphère sans stockage préalable sans toutefois encrasser rapidement le filtre, limitant de ce fait les opérations de maintenance malgré un encombrement du séparateur extrêmement réduit. Bien évidemment, les formes des chambres 1 et 8 peuvent être quelconques.

Cependant, dans un mode de réalisation préféré conforme à celui représenté aux figures 1 et 2, la chambre de centrifugation 1 est de révolution autour de l'axe longitudinal D et présente des génératrices inclinées par rapport au plan normal à l'axe de rotation et à allure convergente de l'extrémité amont 3 de ladite chambre vers l'extrémité aval 4 de ladite chambre. Cette chambre peut, de ce fait, affecter par exemple une forme tronconique. Quant aux parois périphériques externes 10 de l'enceinte préférablement stationnaire 8 de récupération du gaz épuré, elles délimitent avec la cloison annulaire 6 un espace 9 de volume décroissant de l'extrémité aval 4 vers l'extrémité amont 3 de la chambre de centrifugation 1. De ce fait, lesdites chambres créent entre elles une zone de dépression qui favorise la répartition du flux épuré sur l'ensemble de la surface de la paroi périphérique 10 de l'enceinte 8, évitant de ce fait tout risque de dégradation du filtre de la paroi périphérique 10 dans la partie haute en raison d'une vitesse de sortie trop importante du flux gazeux épuré.

Bien entendu, l'invention n'est pas limitée aux exemples de réalisation ci-dessus décrits et représentés, pour lesquels on pourra prévoir d'astres variantes, sans pour cela sortir du cadre des revendications annexées. Ainsi, par exemple, on disposera avantageusement sur la paroi interne de la cloison 6 des anneaux 6a disposés inclinés au voisinage immédiat de chaque disque constitutif de l'équipage mobile de manière à récupérer de façon sélective, étage par étage, les phases lourdes centrifugées.

Ces anneaux peuvent se présenter sous forme d'un hélicoïde continu.

En complément, on peut prévoir des orifices 6b dans la cloison 6 pour l'extraction sélective desdites phases lourdes récupérées par chaque anneau.

Un effet similaire peut être obtenu en prolongeant chaque disque de centrifugation d'un anneau ou d'ailettes orientés vers la paroi interne de la cloison 6.

En suivant une autre disposition complémentaire, il peut être avantageux de placer au moins un joint d'étanchéité entre la périphérie du disque supérieur de l'équipage mobile et l'extrémité supérieure de la cloison 6.

Dans certaines applications, le joint d'étanchéité est supprimé et la cloison 6 recouvre partiellement la partie inférieure de la turbine d'aspiration pour orienter une partie du flux de cette turbine notamment sur la face interne de ladite cloison pour accompagner et faciliter notamment par augmentation de la pression, l'extraction des particules lourdes centrifugées en direction de la base de la chambre de séparation et de l'ouverture d'évacuation 7.

## Revendications

1. Séparateur centrifuge de fluides chargés de particules du type comprenant une chambre de centrifugation (1) équipée de moyens d'entraînement (2) pour créer un flux gazeux axial soumis à centrifugation dans ladite chambre, le flux à épurer pénétrant dans cette chambre (1) par une ouverture d'entrée (3) dite ouverture amont et étant soumis à l'action d'un équipage mobile (5) générant radialement un champ centrifuge séparateur sur ce flux qui s'échappe partiellement épuré par une ouverture de sortie (4) dite ouverture aval,
séparateur caractérisé en ce que l'ouverture aval (4) de ladite chambre de centrifugation (1) débouche dans une enceinte (8) partagée par une cloison annulaire (6) coaxiale à l'équipage mobile (5) et l'entourant de manière à délimiter deux chambres de traitement, l'une (1), de centrifugation entourant l'équipage mobile (5), pour la récupération des particules lourdes, l'autre (9), de filtration entourant coaxialement la première chambre (1), pour le traitement final du fluide gazeux épuré.

2. Séparateur selon la revendication 1,
caractérisé en ce que l'enceinte (8) est délimitée par des parois périphériques externes (10) filtrantes.

3. Séparateur selon l'une des revendications 1 et 2,
caractérisé en ce que ladite enceinte (8) est stationnaire.

4. Séparateur selon la revendication 1,
caractérisé en ce que la chambre de centrifugation (1) est délimitée par la paroi collectrice (6) des particules qui est de révolution autour d'un axe longitudinal (D) constituant l'axe de rotation de l'équipage mobile (5), ladite chambre (1) présentant des génératrices, inclinées par rapport au plan normal à l'axe de rotation (D), et à allure convergente de l'extrémité amont (3) de ladite chambre vers l'extrémité aval (4) de ladite chambre.

5. Séparateur selon la revendication 4,
caractérisé en ce que ladite chambre de centrifugation (1) affecte une forme tronconique.

6. Séparateur selon l'une des revendications 1 à 3,
caractérisé en ce que les parois périphériques externes (10) de l'enceinte (8) de récupération du gaz épuré délimitent avec la cloison annulaire (6) un espace (9) de volume décroissant de l'extrémité aval (4) vers l'extrémité amont (3) de la chambre de centrifugation (1).

7. Séparateur selon la revendication 1 ,
caractérisé en ce que les moyens d'entraînement du fluide à épurer de l'extrémité amont (3) vers l'extrémité aval (4) de ladite chambre (1) sont intégrés dans l'équipage mobile (5).

8. Séparateur selon la revendication 7,
caractérisé en ce que les moyens d'entraînement sont constitués par des pales montées solidaires de plaques de révolution superposées et reliées entre elles au moyen d'entretoises ou d'un axe de rotation commun, lesdites plaques constituant l'équipage mobile (5).

9. Séparateur selon la revendication 8,
caractérisé en ce que les pales sont montées radialement sur lesdites plaques et sont inclinées par rapport à la surface supérieure desdites plaques d'un angle déterminé et comportent au niveau de leur base de raccordement avec ladite plaque des orifices traversants assurant le nettoyage de l'angle de raccordement pale/plaque.

10. Séparateur selon l'une des revendications 1 à 6,
caractérisé en ce que des anneaux (6a) et/ou des ailettes (6b) sont disposés inclines sur la paroi interne de la cloison annulaire (6) au voisinage de chaque élément constitutif de l'équipage mobile (5).

11. Séparateur selon l'une des revendications 1 à 10,
caractérisé en ce que les moyens d'entraînement du fluide à épurer sont constitués par une turbine d'aspiration (2) disposée au-dessus de l'équipage mobile (5), la partie inférieure de la turbine (2) étant recouverte partiellement par la cloison (6) pour orienter une partie du flux de cette turbine notamment sur la face interne de cette cloison (6).

## Claims

1. Centrifugal separator for fluids charged with particles, of the type comprising a centrifugation chamber (1) provided with driving means (2) to create an axial gaseous flow subjected to centrifugation in the said chamber, the flow to be cleaned passing into this chamber (1) by way of an inlet aperture (3) referred to as an upstream aperture and being subjected to the action of a moving element (5) radially generating a centrifugal separating field on this flow which escapes, partially cleaned, by way of an outlet aperture (4) referred to as a downstream aperture,
the separator being characterised in that the downstream aperture (4) of the said centrifugation chamber (1) opens into a housing (8) divided by an annular partition (6) coaxial to the moving element (5) and surrounding it in such a way as to define two process chambers, one (1), for centrifugation, surrounding the moving element (5) for the recovery of heavy particles, the other (9), for filtration, coaxially surrounding the first chamber (1) for the final treatment of the cleaned gaseous fluid.

2. Separator according to claim 1,
characterised in that the housing (8) is defined by external peripheral filter walls (10).

3. Separator according to one of claims 1 and 2,
characterised in that the said housing (8) is stationary.

4. Separator according to claim 1,
characterised in that the centrifugation chamber (1) is defined by the wall (6) for collecting particles, which turns about a longitudinal axis (D) forming the axis of rotation of the moving element (5), the said chamber (1) having generatrices inclined with respect to the plane normal to the axis of rotation (D), and tending to converge from the upstream end (3) of the said chamber towards the downstream end (4) of the said chamber.

5. Separator according to claim 4,
characterised in that the said centrifugation chamber (1) is in the form of a truncated cone.

6. Separator according to one of claims 1 to 3,
characterised in that the external peripheral walls (10) of the housing (8) for recovery of cleaned gas define, with the annular partition (6), a space (9) of a volume decreasing from the downstream end (4) to the upstream end (3) of the centrifugation chamber (1).

7. Separator according to claim 1,
characterised in that the means for driving the fluid to be cleaned from the upstream end (3) to the downstream end (4) of the said chamber (1) are integrated in the moving element (5).

8. Separator according to claim 7,
characterised in that the driving means are formed by blades fixedly mounted on superimposed rotating plates which are connected to each other by cross pieces or a common rotational axis, the said plates forming the moving element (5).

9. Separator according to claim 8,
characterised in that the blades are mounted radially on the said plates and are inclined with respect to the upper surface of the said plates by a specific angle and comprise, at their base which connects to the said plate, through-going orifices ensuring that the corner of the connection between the blade and the plate is cleaned.

10. Separator according to one of claims 1 to 6,
characterised in that rings (6a) and/or wings (6b) are disposed in an inclined manner on the internal wall of the annular partition (6) in the proximity of each element forming the moving element (5).

11. Separator according to one of claims 1 to 10,
characterised in that the means for driving the fluid to be cleaned are formed by a suction turbine (2) disposed above the moving element (5), the lower part of the turbine (2) being partially covered by the partition (6) to orientate a part of the flow of this turbine in particular to the internal face of this partition (6).

## Patentansprüche

1. Zentrifugalabacheider für Partikel enthaltende Fluide, mit einer Zentrifugierkammer (1), die mit Antriebsmitteln (2) zum Erzeugen eines axialen gashaltigen Flusses versehen ist, der in der Kammer einem Zentrifugieren unterworfen wird, wobei der zu reinigende Fluß in diese Kammer (1) durch eine als vordere Öffnung bezeichnete Eintrittsöffnung (3) eintritt und der Wirkung eines beweglichen Organes (5) unterworfen ist, das radial ein Zentrifugalabscheidefeld auf den Fluß ausübt, der teilweise gereinigt durch eine als hintere Öffnung bezeichnete Auslaßöffnung (4) ausströmt, dadurch gekennzeichnet, daß die hintere Öffnung (4) der Zentrifugierkammer (1) in eine Umfassung (8) mündet, die durch eine ringförmige Trennwand (6) unterteilt ist, die zu dem beweglichen Organ (5) koaxial ist und dieses umgibt, derart, daß sie zwei Behandlungskammern begrenzt, von denen die eine (1) zum Zentrifugieren das bewegliche Organ (5) umgibt zum Wiedergewinnen schwerer Partikel und die andere (9) zur Filterung koaxial die erste Kammer (1) umgibt für das abschließende Behandeln des gereinigten gashaltigen Fluids.

2. Abscheider nach Anspruch 1,
dadurch gekennzeichnet, daß die Umfassung (8) durch äußere filtrierende Umfangswandungen (10) begrenzt ist.

3. Abscheider nach einem der Ansprüche 1 und 2,
dadurch gekennzeichnet, daß die Umfassung (8) feststehend ausgebildet ist.

4. Abscheider nach Anspruch 1,
dadurch gekennzeichnet, daß die Zentrifugierkammer (1) durch die Wandung (6) zum Sammeln von Partikeln begrenzt ist, die um eine Längsachse (D) drehbar ist, die die Drehachse des beweglichen Organes (5) bildet, wobei die Kammer (1) Erzeugende aufweist, die relativ zu der Ebene, die zu der Drehachse (D) senkrecht ist, geneigt sind, und wobei die Kammer einen von dem vorderen Ende (3) der genannten Kammer zu dem hinteren Ende (4) der Kammer konvergierenden Verlauf aufweist.

5. Abscheider nach Anspruch 4,
dadurch gekennzeichnet, daß die Zentrifugierkammer (1) eine kegelstumpfartige Form aufweist.

6. Abscheider nach einem der Ansprüche 1 bis 3,
dadurch gekennzeichnet, daß die äußeren Umfangswandungen (10) der Umfassung (8) zur Wiedergewinnung des gereinigten Gases mit der ringförmigen Trennwand (6) einen Raum (9) bilden, dessen Volumen von dem hinteren Ende (4) zu dem vorderen Ende (3) der Zentrifugierkammer (1) abnimmt.

7. Abscheider nach Anspruch 1,
dadurch gekennzeichnet, daß die Mittel zum Antreiben des zu reinigenden Fluides vom vorderen Ende (3) zum hinteren Ende (4) der Kammer (1) in das bewegliche Organ (5) integriert sind.

8. Abscheider nach Anspruch 7,
dadurch gekennzeichnet, daß die Antriebsmittel durch Blätter gebildet sind, die fest mit Drehplatten verbunden sind, die übereinander angeordnet und miteinander mittels Stegen oder einer gemeinsamen Drehachse verbunden sind, wobei die Platten das bewegliche Organ (5) bilden.

9. Abscheider nach Anspruch 8,
dadurch gekennzeichnet, daß die Blätter radial an den Platten angeordnet und relativ zu den oberen Flächen der Platten um einen vorbestimmten Winkel geneigt sind und auf Höhe ihrer Basis zur Verbindung mit der Platte Durchgangsöffnungen aufweisen, die die Reinigung des Winkels der Verbindung Blatt/Platte sicherstellen.

10. Abscheider nach einem der Ansprüche 1 bis 6,
dadurch gekennzeichnet, daß Ringe (6a) und/oder Rippen (6b) geneigt an der inneren Wandung der ringförmigen Trennwand (6) im Bereich jedes das bewegliche Organ (5) bildenden Elementes angeordnet sind.

11. Abscheider nach einem der Ansprüche 1 bis 10,
dadurch gekennzeichnet, daß die Mittel zum Antreiben des zu reinigenden Fluides durch eine Ansaugturbine (2) gebildet sind, die oberhalb des beweglichen Organes (5) angeordnet ist, wobei der untere Teil der Turbine (2) teilweise durch die Trennwand (6) abgedeckt ist, um einen Teil des Flusses dieser Turbine insbesondere auf die innere Fläche dieser Trennwand (6) zu richten.
